# EUROPEAN PATENT SPECIFICATION

(11) **EP 1 299 957 B1**
(45) Date of publication and mention of the grant of the patent: **13.12.2006**
(21) Application number: 01962746.2
(22) Date of filing: 18.06.2001
(51) Int. Cl.: H04B 1/20

(54) **SYSTEM AND PROCESS FOR ADDRESSING A CENTRAL PROCESSING UNIT OF A MULTI-DEVICE APPLIANCE AND CORRESPONDING APPLIANCE**
SYSTEM UND VERFAHREN ZUR ADRESSIERUNG EINES ZENTRALPROZESSOREINHEIT FÜR MULTIGERÄTEN , UND ENTSPRECHENDES GERÄT
SYSTEME ET PROCEDE D'ADRESSAGE D'UNE UNITE CENTRALE D'UN APPAREIL A MULTIPLES DISPOSITIFS ET APPAREIL CORRESPONDANT

(30) Priority: 13.07.2000 FR 0009256
(43) Date of publication of application: 09.04.2003
(73) Proprietor: Thomson Licensing, 92100 Boulogne-Billancourt (FR)
(72) Inventor: STEYER, Jean-Marie Thomson Multimedia, F-92648 Boulogne (FR); GRAEF, Lucien Thomson Multimedia, F-92648 Boulogne (FR)
(74) Representative: Kerber, Thierry
(86) International application number: PCT/EP2001/006843
(87) International publication number: WO 2002/007335

(56) References cited:
- EP-A- 0 505 006
- EP-A- 0 991 271
- US-A- 5 712 834

## Description

The present invention concerns a system and a process for addressing a central processing unit of a multi-device appliance, as well as a corresponding appliance. It applies in particular in the field of multimedia.

A receiver with integrated MPEG decoder, also referred to as an IRD (Integrated Receiver/Decoder) or set top box, generally comprises a front-face panel, provided in particular with detectors of infrared (hereinafter "IR") signals originating from a remote control, displays for station numbers, manual control buttons and monitoring lights. It also comprises a mothercard or Main Board, furnished with a CPU central processing unit with reloadable software (flashed software).

In known IRDs having low energy consumption, the front panel is furnished with a processing unit in the form of a masked CPU with non-modifiable embedded software (firmware), responsible among other things for decoding and transmitting the IR commands if necessary and for waking up and monitoring the decoder. This makes it possible to invoke the latter only when a decoder switch-on command is recognized, via addressing information responding both to the protocol and to the subaddress of this protocol enabling the IRD to be activated. Thus, the supply to the mothercard remains interrupted in standby mode, thereby increasing the lifetime of the IRD and allowing a very appreciable saving of energy, since the front panel has only low consumption. What is more, the decoder is not invoked unnecessarily in the normal operating mode, thereby avoiding the need to slow down the applications currently executing.

The developments in multiple applications, involving for example hi-fi deck, video recorder and IRD, have led to the development of remote control apparatus capable of addressing multiple devices, while being able to change addressing. According to this known technique, each receiver apparatus is of the type with a single input (corresponding to a given IR address of a given protocol), and can be provided with a front panel performing filtering in the manner indicated hereinabove, to reduce the consumption of energy.

However, the upsurge in new applications centred on IRDs, such as video games or interactions between television and Internet network, have driven the development of special remote controls, particularly in the form of keypads and IR joysticks. These existing remote controls compromise the use of a single-input apparatus to address the various devices.

It would therefore appear to be extremely attractive to implement centralization of the remote control processing, in a multimedia appliance comprising several devices (for example IRD, hi-fi deck and DVD recorder, Internet navigator) each having a specific address. Such an appliance could receive IR commands originating from several remote controls, responding to various addresses, or even to various protocols. However, this prospect poses difficulties. Specifically, the centralizing of the system would lead to frequent invoking of a central processing unit, each time one of the remote controls is pressed. This would result in premature wearing-out of the appliance through repeated switching-on, as well as the slowing down of the operations currently executing in respect of inconsequential IR commands.

One solution could consist in using the front panel as filter means, in the same way as for the single-input devices. However, this would lead to the capabilities of the appliance being frozen, since the processing module of the front panel is in the form of non-modifiable integrated software. Moreover, changing the mode of implementation of the software in the front panel in order to be able to reload it would lead to a detrimental increase in the cost of manufacturing this front panel.

The present invention relates to a system for addressing a central processing unit of a multi-device appliance, capable of processing control signals addressed to the various devices originating from several remote controls, whilst avoiding the problems mentioned above. The addressing system of the invention thus makes possible prior filtering of the control signals by means of built-in integrated software, whilst permitting flexible adaptation of the capabilities offered by the multi-device appliance.

The invention also relates to a multi-device appliance and to a process for addressing a central processing unit of a multi-device appliance, having the advantages cited above.

It applies in particular to the field of multimedia.

To this end, the subject of the invention is a system for addressing a central processing unit of a multi-device appliance. This addressing system comprises a processing module designed:
- to receive control signals comprising control information for the devices of the appliance,
- to identify from among this control information, the control information that is to be transmitted
- and to selectively transmit to the central processing unit the control information that is to be transmitted. According to the invention, the addressing system also comprises:
- a dynamic filtering memory intended to contain at least one set of transmission indicators for the control information; each of these sets is associated with one or more operating states of the central processing unit and the indicators correspond for each of these sets to some of the control information or to all the control information; this control information associated with the indicators is the so-called "transmission information";
- and a dynamic filtering module designed to identify, upon receptions of control signals in respect of a current operating state of the central processing unit, the transmission information accepted and/or rejected by the central processing unit in respect of the set associated with this operating state, the so-called current set, and to dynamically modify accordingly in the memory the transmission indicators of this set.

Moreover, the processing module is designed to select as a function of the transmission indicators of the current set of the memory the control information that is to be transmitted.

The invention thus relies on dynamic filtering performed upstream of the central processing unit of the appliance. This dynamic filtering employs the dynamic filtering memory, the content of which is modified dynamically by interaction with the central processing unit, during successive uses of the appliance. The modifications performed may depend on the specifications of a user or applications executed. The addressing system of the invention thus performs genuine learning, from an initial configuration, so as to converge to an optimal configuration.

Great modularity is thus offered in respect of the appliance, since various devices may be added or removed. Specifically, even though the downstream processing module is in the form of built-in software, it permits adaptation to a great variety of devices.

Moreover, while also being able to have recourse to an economical preprocessing assembly, since built-in software can be employed for this, the central processing unit need not be invoked frequently. It is even possible, after the prior learning phase, to achieve minimal invoking of the central processing unit, the control information being sent to it only wittingly. More precisely, this invoking is performed only if the processing module recognizes the control information which is acceptable both from the point of view of its own criteria (identification of an authorized protocol and of an authorized subaddress) and also of those of the central processing unit (selection from among the protocols and subaddresses which are a priori recognizable by the processing module).

Thus, in standby mode, the central processing unit is activated only if the control information is actually intended for it, thereby making it possible to substantially prolong the lifetime of the appliance by avoiding unnecessary switching-on/switching-off. In the normal operating mode, the active applications in the central processing unit are not slowed down unnecessarily. The addressing system in fact makes it possible to relieve the central processing unit of the activities of decoding the control signals received (such as in particular IR messages) and to select the useful messages in respect of the central processing unit. These operations are performed in cooperation with the dynamic filtering memory by the processing module, which constitutes an ancillary processing unit for the central processing unit and is advantageously located in a front panel of the appliance. For its part, the dynamic filtering module intervenes downstream of the processing module, when the latter has decided to transmit the messages received to the central processing unit.

The distinction between the various entities (central processing unit, processing module, dynamic filtering module, dynamic filtering memory) should be understood as functional and not necessarily hardware-related. For example, the functions of the dynamic filtering module may in reality be undertaken by the central processing unit itself; some may also be carried out by the central processing unit, whilst others are undertaken by an independent unit. However, preferably, the processing module and the dynamic filtering memory are physically divorced from the central processing unit. Specifically, the selective invoking of the latter then offers all of the advantages mentioned above.

The control information for the control signals generally comprises three parts: a protocol, a subaddress and control data. The protocol is for example chosen from among the NEC, R2000, RC5, RC6 or RCA protocols. The expression "subaddress" is understood to mean a parameter of a specified protocol, which makes it possible to identify the class of apparatus addressed from among all those classes which can be addressed by this protocol. Finally, the control data relate to the instructions given to an addressed device, for the activation of a specified function. For example, this function can consist of the turning-on of the device in standby mode, of the selecting of a station or of the varying of the sound level. It is the protocol which determines the extent of the addressing (number of subaddresses) as well as the number of possible commands. In general the format of these parameters varies from one protocol to another.

The transmission indicators, on which the dynamic filtering relies, are preferably associated with any one of these three parts of the control information or with any one of their combinations. In a variant embodiment, they are associated with one or more subparts of these three parts.

Thus, in a first form of the transmission indicators within the dynamic filtering memory, these indicators comprise binary indicators respectively associated with subaddresses of at least one protocol.

By way of illustration, the R2000 protocol is catered for by employing two bytes in the filtering memory, holding acceptance or rejection information on respectively the 16 subaddresses of this protocol.

In a second form, the transmission indicators comprise binary indicators respectively associated with protocols.

This second form, which can replace the first, is preferably coupled therewith, in such a way that the filtering memory contains binary indicators indicating both which protocols are authorized and which subaddresses of these protocols are authorized. A variable bit is thus advantageously assigned to each preselected protocol (for example the collection of those mentioned hereinabove), in addition to the variable bits respectively associated with the subaddresses of each of these protocols.

According to a third form of embodiment of the transmission indicators, the latter comprise binary indicators respectively associated with control data.

This third form is advantageously coupled with the previous two.

The expression "operating state" of the central processing unit is understood to mean a current state pertaining to the collection of the devices of the appliance. Thus, in advantageous embodiments, the dynamic filtering memory is intended to contain at least two sets of the transmission indicators simultaneously or alternatively and the dynamic filtering module is designed to activate in the memory the current set associated with the current operating state of the central processing unit.

Various sets of transmission indicators are therefore provided, depending on the operating state of the central processing unit. For example, a first set corresponds to a standby state of all the devices and a second set to a normal operating state of all the devices. In an advantageous embodiment, the number of sets of transmission indicators is equal to twice the maximum number of devices. The sets then form pairs respectively associated with the various devices actually or potentially present in the appliance, each pair being made up of a first and of a second set respectively corresponding to the standby state and to the normal operating state of the associated device. Other operating states catered for may relate in particular to the type of activity undertaken by one of the devices (for example recording, use of a service on the Internet) or a level of activity (for example number of windows open on a screen, sound level).

According to a particular embodiment, the various sets of transmission indicators all contain the same indicators. However, in a preferred embodiment, they contain distinct indicators. This embodiment makes it possible to adapt the composition of each set to the most suitable filtering. For example, for the particular case with two sets respectively corresponding to the standby state and to the normal operating state of the central processing unit, the first set contains a much reduced number of indicators making it possible to identify whether one of the devices is activated by pressing an on button. The indicators chosen for this first set therefore comprise at least one indicator relating to the control datum for the pressing of an on button, and possibly indicators relating to the addressing of the devices. The second set of indicators is much more complete, and may in particular relate to several types of control data.

The activation of the current set associated with the current operating state of the central processing unit preferably relies on an update performed with each change of state of the central processing unit. For example, in the particular case with two sets respectively corresponding to the standby state and to the normal operating state of the central processing unit, as soon as the central processing unit decides to enter the standby state, it orders the dynamic filtering module to activate the first set of indicators (standby state), before placing itself on standby. Similarly, as soon as it turns on one of the devices, it orders the dynamic filtering module to activate the second set of indicators (normal operating state). In a first form of storage of the sets of indicators in the dynamic filtering memory, the latter is designed to hold the various sets simultaneously. A simple pointer is then sufficient for instantaneously identifying the active set in the filtering memory. This embodiment may require relatively sizeable memory space when numerous operating states are catered for. On the other hand, it requires fewer updates of the content of the filtering memory.

In a second form of storage of the sets of indicators in the dynamic filtering memory, the latter is designed to hold just one set at a time. It is therefore of sufficient size to hold the set of maximum size. The complete content of the various updated sets is then preferably held in a memory of the central processing unit. This embodiment involves fairly hefty exchanges between the dynamic filtering module and the filtering memory. On the other hand, it permits the use of a memory of reduced capacity.

In a third form of embodiment, the two previous forms are combined. For example, in the particular case with a number of sets equal to twice the number of devices, each set corresponding to the standby state or normal operating state of one of the devices, the dynamic filtering memory is designed to store a number of sets corresponding to the number of devices. For each device, either the set associated with its standby state, or that associated with its normal operating state is stored. The filtering module is then intended to update the sets of the various devices, with each state modification. Moreover, each time the processing module receives control signals, it identifies the device concerned by means of the addressing information and selects the appropriate set.

In another embodiment, a single set of transmission indicators is used, whatever the operating states of the central processing unit. This embodiment, which is less flexible and effective than the previous ones, is on the other hand simpler to implement. Moreover, it requires reduced memory space and does not necessitate reconfigurations of the filtering memory by the filtering module.

The addressing system preferably comprises a reinitializing device, capable of giving each of the said sets of transmission indicators of the dynamic filtering memory a default configuration.

In a first form of actuating the reinitializing device, the latter is triggered by any general power cut. In a second form of actuation, the appliance comprises auxiliary means of backup power supply, and this device is triggered only by an explicit command from a user.

According to a first embodiment of the reinitializing device, in the default configuration, the transmission indicators all indicate that the addressing information is accepted by the central processing unit. The dynamic filtering module is then intended to dynamically deactivate the transmission indicators corresponding to the control information rejected by the central processing unit.

This embodiment is especially advantageous since, during the learning phase, the control information (of which the transmission information is recognized by the processing module) is naturally transmitted to the central processing unit. The latter then performs a sort allowing the appropriate transmission indicators to be placed in the closed position as matters proceed.

According to a second embodiment of the reinitializing device, in the default configuration, some of the transmission indicators indicate that the control information is accepted by the central processing unit and the others indicate that the control information is rejected by the central processing unit. The configuration chosen is determined according to the highest probability of use of the appliance. The dynamic filtering module is then intended to dynamically deactivate the transmission indicators in the open position corresponding to the control information rejected by the central processing unit. The central processing unit is moreover furnished with specific means for reactivating the transmission indicators in the closed position, activated by a user or an application.

This embodiment is more complex than the previous one and requires complementary specific intervention. However, it has the merit of converging very quickly to an optimal configuration. Preferably, this default configuration is modifiable by a user, this giving the system more flexibility.

Advantageously, the processing module and the dynamic filtering memory are in the form of integrated and built-in software of an electronic chip, the dynamic filtering module preferably being in the form of reloadable software of the central processing unit.

An embodiment which is both economical (processing module and filtering memory) and flexible (filtering module) is thus obtained.

In a variant embodiment, the dynamic filtering module forms part of the integrated and built-in software.

Preferably, the processing module and the dynamic filtering memory are disposed in a front-face panel (front panel) of the multi-device appliance and the central processing unit is disposed in a mothercard (main board) of this appliance.

The main board and the front panel are preferably linked by a bus for serial communication between integrated circuits, such as the one marketed under the name I2C (Inter-IC control).

In a variant embodiment, the processing module and the filtering memory are divorced from the front panel, being for example installed likewise on the mothercard.

The subject of the invention is also a multi-device appliance comprising an addressing system according to the invention.

This appliance advantageously consists of a multimedia appliance designed to receive at least part of the said control signals in the form of infrared signals originating from remote controls.

The invention applies also to a process for addressing a central processing unit of a multi-device appliance. In this process:
- control signals comprising control information for the devices are received in a processing module,
- the control information that is to be transmitted is identified by means of the processing module from among the control information,
- and the control information that is to be transmitted is selectively transmitted to the central processing unit by means of the processing module.

According to the invention:
- some of the control information, the so-called transmission information, accepted and/or rejected by the central processing unit is selected by means of a dynamic filtering module, upon receptions of control signals in respect of an operating state of the central processing unit, and transmission indicators for the control signals of a current set contained in a dynamic filtering memory associated with the operating state of the central processing unit are dynamically modified accordingly by means of the dynamic filtering module, these transmission indicators corresponding to the transmission information,
- and the control information that is to be transmitted is selected by means of the processing module as a function of the transmission indicators of the current set.

The invention will be better understood and illustrated by means of the following exemplary embodiments and implementations, which are in no way limiting, with reference to the appended figures, in which:
- Figure 1 is a basic diagram of a multi-device appliance comprising an addressing system in accordance with the invention;
- Figure 2 illustrates in block diagram form the interactions between the various elements of the addressing system of Figure 1;
- Figures 3A to 3E represent in a simplified manner the content of the dynamic filtering memory of the addressing system and the actions performed by the central processing unit of the appliance of Figure 1; more precisely:

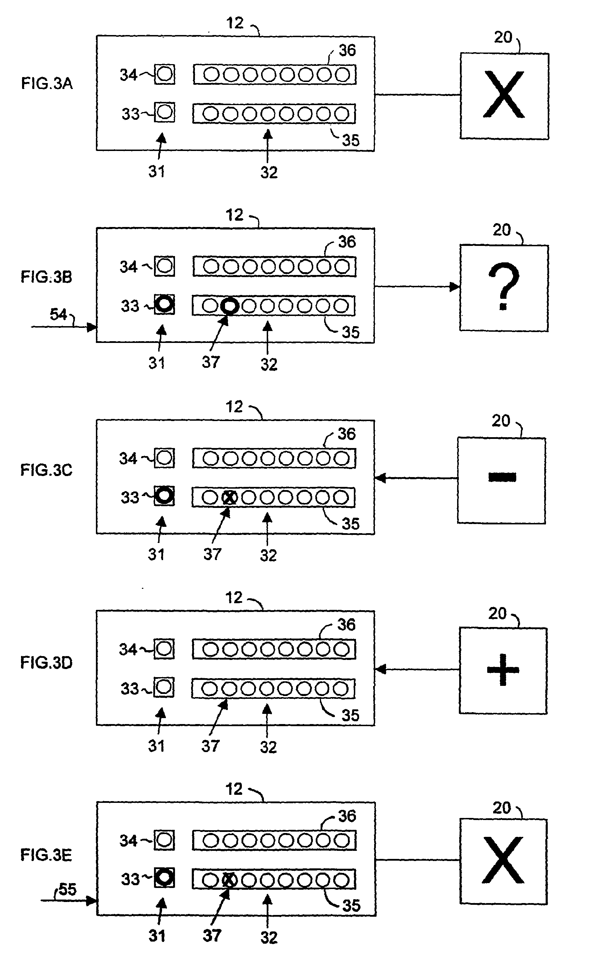

- Figure 3A shows the memory and the central processing unit in the standby state, without control signal reception, all the transmission indicators being in the open position, for example after a reinitialization;
- Figure 3B shows the memory and the central processing unit during the reception of a control signal recognized by the processing module of the addressing system as corresponding to a given protocol and a given subaddress;
- Figure 3C shows the memory and the central processing unit after reception of the control signal of Figure 3B and transmission to the central processing unit of a corresponding control message, when the addressing information for the control message is rejected by the central processing unit;
- Figure 3D shows the memory and the central processing unit after reception of the control signal of Figure 3B and transmission to the central processing unit of a corresponding control message, when the addressing information for the control message is accepted by the central processing unit;
- Figure 3E shows the memory and the central processing unit after rejection of the addressing information by the central processing unit in respect of the control signal of Figure 3B (Figure 3C), when a new control signal having the same subaddress of the same protocol as the control signal of Figure 3B is sent subsequently.

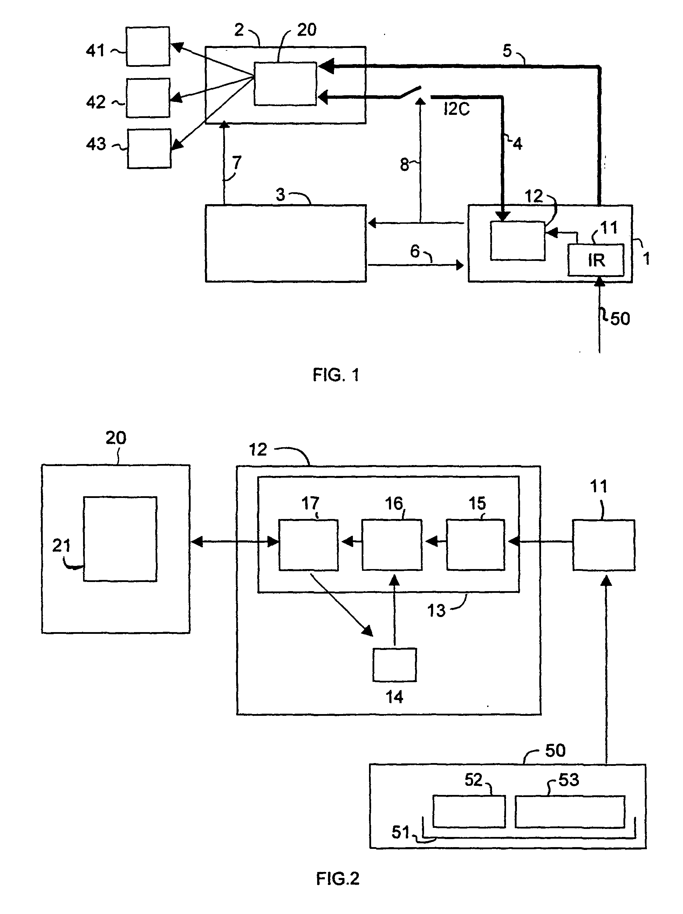

A multi-device appliance (Figure 1) comprises several devices 41-43 controlled by one and the same central processing unit 20 of a mothercard 2. These devices consist for example of an IRD, a DVD recording apparatus and an Internet navigation device. The central processing unit 20 is a CPU with reloadable software (flashed CPU), furnished with downloaded application packages.

The appliance also comprises a front-face panel 1, provided with a collection of IR detectors 11 and with an electronic chip 12. This panel 1 carries out the management of the electrical energy and of other functions, such as the keypad, the IR remote control monitoring and the management of alarms, and supports displays (for example for the station number). The electronic chip 12 comprises (Figure 2) a processing module 13 and a memory 14, in the form of non-modifiable integrated software (firmware). The processing module 13 is designed to read information from the memory 14 and to receive signals sent by the detectors 11. The processing module 13 itself comprises a protocol identification and information extraction submodule 15, a submodule 16 for taking a decision to send and a communication submodule 17.

The memory 14 is intended to contain indicators of transmission to the mothercard 2 of control messages extracted from signals received by the panel 1 (Figure 3A). Each of these indicators gives an item of binary information regarding the transmission ("open" position) or otherwise ("closed" position) of the messages in respect of a given address. Thus, some of the indicators (collection 31) relate to protocols used for addressing (for example NEC, R2000, RC5, RC6, RCA etc.), and the other indicators (collection 32) correspond to subaddresses of these protocols. In the example set forth, the collection 31 contains two binary indicators 33 and 34 respectively associated with two protocols, and the collection 32 contains two rows 35 and 36 of binary indicators, respectively associated with the subaddresses of these protocols.

Initially, the memory 14 has a default configuration, which is reinstalled with each reinitialization (hard reset) of the appliance. In a variant embodiment, the default configuration is reinstalled when requested by the user. In the example illustrated (Figure 3A), the default configuration is such that all the binary indicators are in the open position.

The electronic chip 12 of the panel 1 interacts with the central processing unit 20 of the mothercard 2 by means of an I2C bus referenced 4, with a specific protocol.

The central processing unit 20 of the mothercard 2 is provided with a dynamic filtering module 21 (Figure 2), capable of interacting with the processing module 13 of the panel 1 and of modifying the content of the memory 14.

The appliance also comprises an electrical power supply unit 3 designed to power respectively the panel 1 and the mothercard 2 by means of power supply lines 6 and 7. The panel 1 is also linked to the power supply unit 3 and to the bus 4 by a control line 8, by means of which the panel 1 can demand interruption of the power supply to the mothercard 2 and of the communication between the panel 1 and the mothercard 2.

When the central processing unit is in the standby mode, only the panel 1 is supplied with energy, thus allowing economical operation.

The panel 1 is moreover connected to the mothercard 2 by an interrupt line 5, which makes it possible, in the normal operating mode, to advise the mothercard 2 that important messages (IR messages amongst others) are available within the panel 1 and can be recovered via the bus 4.

During operation, the detectors 11 receive IR signals 50, demodulate them and send digital signals corresponding to the demodulated signals 50 to the processing module 13 of the chip 12. These IR signals 50 (hence also the digital signals transmitted) contain a protocol type 51, as well as addressing information 52 and data 53, such as control instructions (higher sound, turn on a recording, brightness reduction, etc.) whose format depends on the protocol used. The protocol type 51 received, possibly associated with the addressing information 52 and with the data 53 extracted, enable any of the devices 41-43 of the appliance to be unambiguously identified.

If the processing module 13 does not succeed in identifying the protocol of the IR message issued, in particular if the IR control protocol is not installed therein, it is not able to extract the useful information therefrom and the signal received is ignored.

If, conversely, the processing module 13 manages to extract this information, it examines the content of the memory 14 so as to ascertain whether or not it needs to invoke the dynamic filtering module 21 of the central processing unit 20. It thus accesses the content of the binary indicator corresponding to the protocol concerned, then if this indicator is in the open position, the content of the binary indicator corresponding to the subaddress concerned according to this protocol. If it is also in the open position, the processing module 13 transmits the command received to the central processing unit 20. On the other hand, if one of these indicators is in the closed position, no command is transmitted, so that the mothercard is not invoked. By way of example (Figure 3B), a signal 54 received by the chip 12 of the panel 1 contains addressing information giving a protocol and a subaddress respectively corresponding to the binary indicators 33 and 37 (the latter belonging to the row 35). These two indicators 33 and 37 being in the open position, a control message extracted from the signal 54 is transmitted to the central processing unit 20.

When the central processing unit 20 receives a control message from the processing module 13, it in turn examines the validity of the addressing information, as a function of the user specifications or of the application currently executing. If the central processing unit 20 recognizes the protocol and the subaddress as being valid (Figure 3D), it executes the functions contained in the message transmitted.

On the other hand, if it rejects the protocol or the subaddress transmitted (Figure 3C), it returns a rejection message to the processing module 13, which message causes the closure of the corresponding binary indicator in the memory 14. In the example represented, the indicator 37 is thus closed in the case where the associated subaddress is not recognized by the central processing unit 20. Moreover, if the central processing unit 20 were in the standby mode before being woken up and invoked by the processing module 13, it orders the processing module 13 to cut its power supply, through an I2C command.

This system thus carries out dynamic filtering in the panel 1, based on the choices made in the mothercard 2. For example, when the indicator 37 has been closed, if a signal 55 received subsequently by the chip 12 contains addressing information relating to the same subaddress (Figure 3E), the addressing information is ignored by the processing module 13. Hence, the central processing unit 20 is not invoked unnecessarily: in the standby mode, a switching on and switching off cycle is avoided; in the operating mode, one avoids the need to disturb a current application in progress and to slow it down (for example a decoder read).

## Claims

1. System for addressing a central processing unit (20) of a multi-device appliance (41-43), the said addressing system comprising a processing module (13) designed to receive control signals (50) comprising control information for the said devices (41-43), so as to identify from among the said control information, the control information that is to be transmitted and to selectively transmit to the central processing unit (20) the said control information that is to be transmitted,
**characterized in that** the addressing system also comprises:
- a dynamic filtering memory (14) intended to contain at least one set of transmission indicators (31, 32) for the control information, each of the said sets being associated with at least one operating state of the central processing unit (20) and the said indicators (31, 32) corresponding for each of the said sets to at least some of the control information, the so-called transmission information,
- and a dynamic filtering module (21) designed to identify, upon receptions of control signals (50) in respect of a current operating state of the central processing unit (20), the transmission information accepted and/or rejected by the central processing unit (20) in respect of the set associated with the said operating state, the so-called current set, and to dynamically modify accordingly in the memory (14) the transmission indicators (31, 32) of the said set,
and **in that** the processing module (13) is designed to select as a function of the transmission indicators (31, 32) of the current set of the memory (14) the control information that is to be transmitted.

2. Addressing system according to Claim 1, **characterized in that** the transmission indicators (31, 32) comprise binary indicators (35, 36) respectively associated with subaddresses of at least one protocol and/or binary indicators (33, 34) respectively associated with protocols.

3. Addressing system according to either of Claims 1 and 2, **characterized in that** the transmission indicators comprise binary indicators respectively associated with control data.

4. Addressing system according to any one of Claims 1 to 3, **characterized in that** the dynamic filtering memory (14) is intended to contain at least two sets of the said transmission indicators (31, 32) and **in that** the dynamic filtering module (21) is designed to activate in the memory (14) the current set associated with the current operating state of the central processing unit (20).

5. Addressing system according to any one of Claims 1 to 4, **characterized in that** it comprises a reinitializing device (21), capable of giving each of the said sets of transmission indicators (31, 32) of the dynamic filtering memory (14) a default configuration.

6. Addressing system according to Claim 5, **characterized in that** in the default configuration of at least one of the said sets, the transmission indicators (31, 32) all indicate that the transmission information is accepted by the central processing unit (20), the dynamic filtering module (21) being intended to dynamically deactivate the transmission indicators (31, 32) corresponding to the transmission information rejected by the central processing unit (20).

7. Addressing system according to any one of Claims 1 to 6, **characterized in that** the processing module (13) and the dynamic filtering memory (14) are in the form of integrated and built-in software of an electronic chip, the dynamic filtering module (21) preferably being in the form of reloadable software of the central processing unit (20).

8. Addressing system according to any one of Claims 1 to 7, **characterized in that** the processing module (13) and the dynamic filtering memory (14) are disposed in a front-face panel (1) of the multi-device appliance (41-43) and **in that** the central processing unit (20) is disposed in a mothercard (2) of the multi-device appliance (41-43).

9. Multi-device appliance (41-43) comprising an addressing system according to any one of Claims 1 to 8.

10. Process for addressing a central processing unit (20) of a multi-device appliance (41-43) in which:
- control signals comprising control information for the said devices (41-43) are received in a processing module (13),
- the control information that is to be transmitted is identified by means of the processing module (13) from among the said control information,
- and the said control information that is to be transmitted is selectively transmitted to the central processing unit (20) by means of the processing module (13),
**characterized in that**:
- some of the control information, the so-called transmission information, corresponding to the current operating state, is selected by means of a dynamic filtering module (21), upon receptions of control signals (50) in respect of the said current operating state of the central processing unit (20), the said transmission information accepted and/or rejected by the central processing unit (20) is identified by means of the said dynamic filtering module (21) and transmission indicators (31, 32) for the control information of a current set contained in a dynamic filtering memory (14) associated with the said operating state of the central processing unit (20) are dynamically modified accordingly by means of the dynamic filtering module (21), the said transmission indicators (31, 32) corresponding to the said transmission information,
- and the control information that is to be transmitted is selected by means of the processing module (13) as a function of the transmission indicators (31, 32) of the current set.

## Patentansprüche

1. System zum Adressieren einer Zentraleinheit (20) eines Mehrvorrichtungsgeräts (41-43), wobei das Adressierungssystem ein Verarbeitungsmodul (13) umfasst, das so ausgelegt ist, dass es Steuersignale (50) empfängt, die Steuerinformationen für die Vorrichtungen (41-43) umfassen, um unter den Steuerinformationen diejenigen Steuerinformationen zu identifizieren, die gesendet werden sollen, und um wahlweise diejenigen Steuerinformationen, die gesendet werden sollen, an die Zentraleinheit (20) zu senden,
**dadurch gekennzeichnet, dass** das Adressierungssystem außerdem umfasst:
- einen dynamischen Filterungsspeicher (14), der dafür vorgesehen ist, wenigstens einen Satz von Übertragungsindikatoren (31, 32) für die Steuerinformationen zu enthalten, wobei jedem der Sätze wenigstens ein Betriebszustand der Zentraleinheit (20) zugeordnet ist und wobei die Indikatoren (31, 32) für jeden der Sätze wenigstens einigen der Steuerinformationen, den so genannten Übertragungsinformationen, entsprechen,
- und ein dynamisches Filterungsmodul (21), das dafür ausgelegt ist, bei Empfängen von Steuersignalen (50) in Bezug auf einen momentanen Betriebszustand der Zentraleinheit (20) die durch die Zentraleinheit (20) akzeptierten und/oder zurückgewiesenen Übertragungsinformationen in Bezug auf den Satz, der dem Betriebszustand zugeordnet ist, den so genannten momentanen Satz, zu identifizieren und die Übertragungsindikatoren (31, 32) des Satzes in dem Speicher (14) dementsprechend dynamisch zu ändern, und **dadurch**, dass das Verarbeitungsmodul (13) dafür ausgelegt ist, in Abhängigkeit von den Übertragungsindikatoren (31, 32) des momentanen Satzes des Speichers (14) diejenigen Steuerinformationen auszuwählen, die gesendet werden sollen.

2. Adressierungssystem nach Anspruch 1, **dadurch gekennzeichnet, dass** die Übertragungsindikatoren (31, 32) binäre Indikatoren (35, 36), die jeweils Unteradressen wenigstens eines Protokolls zugeordnet sind, und/oder binäre Indikatoren (33, 34), die jeweils Protokollen zugeordnet sind, umfassen.

3. Adressierungssystem nach Anspruch 1 oder 2, **dadurch gekennzeichnet, dass** die Übertragungsindikatoren binäre Indikatoren, die jeweils Steuerdaten zugeordnet sind, umfassen.

4. Adressierungssystem nach einem der Ansprüche 1 bis 3, **dadurch gekennzeichnet, dass** der dynamische Filterungsspeicher (14) dafür vorgesehen ist, wenigstens zwei Sätze der Übertragungsindikatoren (31, 32) zu enthalten, und dass das dynamische Filterungsmodul (21) dafür ausgelegt ist, in dem Speicher (14) den momentanen Satz zu aktivieren, der dem momentanen Betriebszustand der Zentraleinheit (20) zugeordnet ist.

5. Adressierungssystem nach einem der Ansprüche 1 bis 4, **dadurch gekennzeichnet, dass** es eine Reinitialisierungsvorrichtung (21) umfasst, die jedem der Sätze von Übertragungsindikatoren (31, 32) des dynamischen Filterungsspeichers (14) eine Standardkonfiguration geben kann.

6. Adressierungssystem nach Anspruch 5, **dadurch gekennzeichnet, dass** die Übertragungsindikatoren (31, 32) in der Standardkonfiguration in wenigstens einem der Sätze alle angeben, dass die Übertragungsinformationen durch die Zentraleinheit (20) akzeptiert werden, und dass das dynamische Filterungsmodul (21) dafür vorgesehen ist, die Übertragungsindikatoren (31, 32), die den durch die Zentraleinheit (20) zurückgewiesenen Übertragungsinformationen entsprechen, dynamisch zu deaktivieren.

7. Adressierungssystem nach einem der Ansprüche 1 bis 6, **dadurch gekennzeichnet, dass** das Verarbeitungsmodul (13) und der dynamische Filterungsspeicher (14) die Form integrierter und eingebauter Software eines elektronischen Chips haben und dass das dynamische Filterungsmodul (21) vorzugsweise die Form ladbarer Software der Zentraleinheit (20) hat.

8. Adressierungssystem nach einem der Ansprüche 1 bis 7, **dadurch gekennzeichnet, dass** das Verarbeitungsmodul (13) und der dynamische Filterungsspeicher (14) in der Frontseitenabdeckung (1) des Mehrvorrichtungsgeräts (41-43) angeordnet sind und dass die Zentraleinheit (20) in einer Mutterkarte (2) des Mehrvorrichtungsgeräts (41-43) angeordnet ist.

9. Mehrvorrichtungsgerät (41-43), das ein Adressierungssystem nach einem der Ansprüche 1 bis 8 umfasst.

10. Verfahren zum Adressieren einer Zentraleinheit (20) eines Mehrvorrichtungsgeräts (41-43), in dem:
- in einem Verarbeitungsmodul (13) Steuersignale empfangen werden, die Steuerinformationen für die Vorrichtungen (41-43) umfassen,
- mittels des Verarbeitungsmoduls (13) unter den Steuerinformationen diejenigen Steuerinformationen, die gesendet werden sollen, identifiziert werden,
- und mittels des Verarbeitungsmoduls (13) diejenigen Steuerinformationen, die gesendet werden sollen, wahlweise an die Zentraleinheit (20) gesendet werden,
**dadurch gekennzeichnet, dass**
- bei Empfängen von Steuersignalen (50) in Bezug auf den momentanen Betriebszustand der Zentraleinheit (20) mittels eines dynamischen Filterungsmoduls (21) einige der Steuerinformationen, die so genannten Übertragungsinformationen, die dem momentanen Betriebszustand entsprechen, ausgewählt werden, die durch die Zentraleinheit (20) akzeptierten und/oder zurückgewiesenen Übertragungsinformationen mittels des dynamischen Filterungsmoduls (21) identifiziert werden und Übertragungsindikatoren (31, 32) für die Steuerinformationen eines in einem dynamischen Filterungsspeicher (14) enthaltenen momentanen Satzes, der dem Betriebszustand der Zentraleinheit (20) zugeordnet ist, mittels des dynamischen Filterungsmoduls (21) dementsprechend dynamisch geändert werden, wobei die Übertragungsindikatoren (31, 32) den Übertragungsinformationen entsprechen,
- und diejenigen Steuerinformationen, die gesendet werden sollen, mittels des Verarbeitungsmoduls (13) in Anhängigkeit von den Übertragungsindikatoren (31, 32) des momentanen Satzes ausgewählt werden.

## Revendications

1. Système d'adressage d'une unité centrale (20) d'un appareillage multi-dispositifs (41-43), ledit système d'adressage comprenant un module de traitement (13) prévu pour recevoir des signaux de commande (50) comprenant des informations de commande desdits dispositifs (41-43), pour identifier parmi lesdites informations de commande, les informations de commande devant être transmises et pour transmettre sélectivement à l'unité centrale (20) lesdites informations de commande devant être transmises,
**caractérisé en ce que** le système d'adressage comprend aussi :
- une mémoire de filtrage dynamique (14) destinée à contenir au moins un jeu d'indicateurs de transmission (31, 32) des informations de commande, chacun desdits jeux étant associé à au moins un état de fonctionnement de l'unité centrale (20) et lesdits indicateurs (31, 32) correspondant pour chacun desdits jeux à au moins certaines des informations de commande, dites informations de transmission,
- et un module de filtrage dynamique (21) prévu pour identifier, lors de réceptions des signaux de commande (50) pour un état de fonctionnement courant de l'unité centrale (20), les informations de transmission acceptées et / ou rejetées par l'unité centrale (20) pour le jeu associé audit état de fonctionnement, dit jeu courant, et pour modifier dynamiquement en conséquence dans la mémoire (14) les indicateurs de transmission (31, 32) duditjeu,
et **en ce que** le module de traitement (13) est prévu pour sélectionner en fonction des indicateurs de transmission (31, 32) du jeu courant de la mémoire (14) les informations de commande devant être transmises.

2. Système d'adressage selon la revendication 1, **caractérisé en ce que** les indicateurs de transmission (31, 32) comprennent des indicateurs binaires (35, 36) associés respectivement à des sous-adresses d'au moins un protocole et / ou des indicateurs binaires (33, 34) associés respectivement à des protocoles.

3. Système d'adressage selon l'une des revendications 1 ou 2, **caractérisé en ce que** les indicateurs de transmission comprennent des indicateurs binaires associés respectivement à des données de commande.

4. Système d'adressage selon l'une quelconque des revendications 1 à 3, **caractérisé en ce que** la mémoire de filtrage dynamique (14) est destinée à contenir au moins deux jeux desdits indicateurs de transmission (31, 32) et **en ce que** le module de filtrage dynamique (21) est prévu pour activer dans la mémoire (14) le jeu courant associé à l'état de fonctionnement courant de l'unité centrale (20).

5. Système d'adressage selon l'une quelconque des revendications 1 à 4, **caractérisé en ce qu'**il comprend un dispositif de réinitialisation (21), capable de donner à chacun desdits jeux d'indicateurs de transmission (31, 32) de la mémoire de filtrage dynamique (14) une configuration par défaut.

6. Système d'adressage selon la revendication 5, **caractérisé en ce que** dans la configuration par défaut d'au moins l'un desdits jeux, les indicateurs de transmission (31, 32) indiquent tous que les informations de transmission sont acceptées par l'unité centrale (20), le module de filtrage dynamique (21) étant destiné à désactiver dynamiquement les indicateurs de transmission (31, 32) correspondant aux informations de transmission rejetées par l'unité centrale (20).

7. Système d'adressage selon l'une quelconque des revendications 1 à 6, **caractérisé en ce que** le module de traitement (13) et la mémoire de filtrage dynamique (14) sont sous forme de logiciel intégré et figé d'une puce électronique, le module de filtrage dynamique (21) étant préférentiellement sous forme de logiciel rechargeable de l'unité centrale (20).

8. Système d'adressage selon l'une quelconque des revendications 1 à 7, **caractérisé en ce que** le module de traitement (13) et la mémoire de filtrage dynamique (14) sont disposés dans un panneau de face avant (1) de l'appareillage multi-dispositifs (41-43) et **en ce que** l'unité centrale (20) est disposée dans une carte mère (2) de l'appareillage multi-dispositifs (41-43).

9. Appareillage multi-dispositifs (41-43) comprenant un système d'adressage selon l'une quelconque des revendications 1 à 8.

10. Procédé d'adressage d'une unité centrale (20) d'un appareillage multi-dispositifs (41-43), dans lequel :
- on reçoit dans un module de traitement (13) des signaux de commande comprenant des informations de commande desdits dispositifs - (41-43),
- on identifie au moyen du module de traitement (13), parmi lesdites informations de commande, les informations de commande devant être transmises,
- et on transmet sélectivement à l'unité centrale (20) au moyen du module de traitement (13) lesdites informations de commande devant être transmises,
**caractérisé en ce que** :
- on sélectionne au moyen d'un module de filtrage dynamique (21), lors de réceptions des signaux de commande (50) pour un état de fonctionnement courant de l'unité centrale (20), certaines des informations de commande, dites informations de transmission, correspondant audit état de fonctionnement courant, on identifie au moyen dudit module de filtrage dynamique (21) lesdites informations de transmission acceptées et / ou rejetées par l'unité centrale (20) et on modifie dynamiquement en conséquence au moyen du module de filtrage dynamique (21), des indicateurs de transmission (31, 32) des informations de commande d'un jeu courant contenu dans une mémoire de filtrage dynamique (14) associé audit état de fonctionnement de l'unité centrale (20), lesdits indicateurs de transmission (31, 32) correspondant aux dites informations de transmission,
- et on sélectionne au moyen du module de traitement (13) en fonction des indicateurs de transmission (31, 32) du jeu courant les informations de commande devant être transmises.
